# FASCICULE DE BREVET EUROPEEN

(11) **EP 4 061 616 B1**
(45) Date de publication et mention de la délivrance du brevet: **26.07.2023**
(21) Numéro de dépôt: 20820988.2
(22) Date de dépôt: 11.12.2020
(51) Int. Cl.: B29C 64/153, B29C 64/357, B29C 64/214, B33Y 30/00, B29C 64/336, B29C 64/205, B29C 64/236, B33Y 10/00

(54) **SYSTÈME ET MÉTHODES DE NIVELLEMENT**
NIVELLIERSYSTEM UND -VERFAHREN
LEVELLING SYSTEM AND METHODS

(30) Priorité: 13.12.2019 BE 201905902
(43) Date de publication de la demande: 28.09.2022
(73) Titulaire: Aerosint SA, 4040 Herstal (BE)
(72) Inventeur: HICK, Matthias, 4830 Limbourg (BE); MARCHAL, Martin, 6780 Wolkrange (BE); MERCELIS, Peter, 2440 Geel (BE)
(74) Mandataire: Gevers Patents
(86) Numéro de dépôt international: PCT/EP2020/085766
(87) Numéro de publication internationale: WO 2021/116409

(56) Documents cités:
- WO-A1-2018/183396
- WO-A1-2019/159644
- WO-A1-2019/213596
- JP-A- 2015 196 254
- JP-A- 2019 077 939
- US-A1- 2018 311 769
- US-A1- 2018 318 928
- US-A1- 2019 143 411

## Description

### Domaine technique

La présente invention concerne un système et une méthode de nivellement d'un lit de poudre. Elle peut notamment être utilisée dans le contexte de l'impression tridimensionnelle.

### Art antérieur

Le document WO2018/059833 décrit un système d'impression tridimensionnelle grâce auquel une structure d'impression tridimensionnelle comprenant plusieurs types de particules peut être formée.

Le document WO2018/183396 décrit une méthode de manipulation de matériaux dans le cadre d'une impression tridimensionnelle. La méthode comprend un transport de matériau pré-transformé à partir d'un réservoir. Le transport peut être contre la gravité.

Le document WO2019/159644 décrit un appareil de fabrication additive du type de fusion à lit de poudre. Cet appareil comprend notamment une unité de dépôt de matériau qui dépose et nivelle une poudre de matériau.

Le document WO2019/213596A1 décrit un système de séchage d'un matériau de création à base de pâte pendant une impression tridimensionnelle. Le système peut comprendre une tête d'impression double comprenant une première buse de distribution pour déposer le matériau de filament pour une couche de moule sous une forme fluide coulante et une seconde buse de distribution pour déposer le matériau de création, qui se présente sous forme de pâte.

Le document JP2015196254A décrit un dispositif d'alimentation en matériau pulvérulent pour un appareil de moulage tridimensionnel. L'appareil permet de supprimer l'apparition d'irrégularités dans une couche de matériau pulvérulent et de mouler un produit de façon précise et rapide.

Le document US 2019/143411 A1 décrit un procédé de fabrication d'un produit semi-fini tridimensionnel. Il comprend les étapes consistant à appliquer une première poudre de matière première sur un support, appliquer une seconde poudre de matière première sur le support, irradier sélectivement la première poudre de matière première, afin de fabriquer une pièce produite à partir de la première poudre de matière première sur le support, et irradier sélectivement la seconde poudre de matière première appliquée sur le support, afin de fabriquer un élément de support produit à partir de la deuxième poudre de matière première.

Le document JP2019077939A décrit un système pour améliorer la productivité en raccourcissant le temps de stratification lorsqu'une pluralité de poudres sont déposées sur un substrat à plat. Ce document divulgue le préambule de la revendication 1.

### Résumé de l'invention

L'objet de l'invention est mis en oeuvre par un système selon la revendication 1 et résolu par une méthode selon la revendication 13 ou 15.

Dans l'invention, lorsque le dispositif de coupe se déplace, la partie supérieure du lit de poudre est coupée par la ligne de coupe et la poudre ainsi enlevée du lit de poudre se retrouve en contact avec la surface de support. Là, elle est entrainée par le système d'entrainement vers la sortie. Ainsi, il est certain que la poudre coupée ne revienne pas sur le lit de poudre, que ce soit vers l'amont ou l'aval de la ligne de coupe.

En effet, il existe des applications où il est très important que la partie inférieure du lit de poudre ne soit en rien modifiée par le nivellement. Par exemple, si le lit de poudre comprend des particules de matériaux différents pour de l'impression tridimensionnelle, il serait très dommageable pour les caractéristiques physiques ou chimiques de l'objet à imprimer que plusieurs matériaux soient mélangés suite à un nivellement ayant créé un mélange de particules différentes.

Le système est préférentiellement agencé pour que le système d'entrainement n'entraine que la poudre en contact avec la surface de support. Ainsi, la poudre restant sur le lit de poudre n'est pas déplacée. Cela permet que le système d'entrainement ne perturbe pas la structure du lit de poudre, notamment en amont de la ligne de coupe.

La surface de support est de préférence située à l'arrière de la ligne de coupe par rapport au déplacement du dispositif de coupe dans la première direction. Cela permet que la poudre coupée arrive en contact avec la surface de support par inertie et/ou par contact avec des particules de poudre en aval.

La ligne de coupe n'est pas nécessairement une ligne continue: elle peut être faite de plusieurs parties de ligne séparées. La ligne de coupe est préférentiellement rectiligne. Le système est préférentiellement configuré pour que la ligne de coupe soit horizontale. La ligne de coupe est couplée mécaniquement à la surface de support. La ligne de coupe forme préférentiellement une extrémité de la surface de support.

La surface de support n'est pas nécessairement une surface continue: elle peut être faite de plusieurs parties de surface séparées. Le système est préférentiellement configuré pour que la surface de support soit inclinée. La surface de support peut être plane ou courbe. Si elle est courbe, elle est préférentiellement concave.

Le système de nivellement comprend préférentiellement un système de mise en mouvement pour déplacer le dispositif de coupe dans la première direction par rapport au lit de poudre. La première direction est de préférence une direction horizontale.

La sortie peut déboucher par exemple vers un dispositif d'évacuation de la poudre, un système de recyclage de la poudre, un système de filtration. La connexion fluidique entre le dessus de la surface de support et la sortie est préférentiellement étanche à la poudre. En d'autres termes, cette connexion fluidique est agencée pour empêcher la poudre d'en sortir. Cela permet que toute la poudre soit conduite jusqu'à la sortie. Le système d'entrainement est agencé de façon à déplacer la poudre en direction de la sortie, et préférentiellement, mais pas nécessairement, jusqu'à la sortie. L'entrainement forme préférentiellement au moins une partie d'une évacuation de la poudre.

Le système de nivellement peut comprendre des actuateurs, par exemple pour contrôler la position de ses différents éléments (par exemples des éléments du dispositif de coupe et/ou du système d'entrainement), leur orientation, leur rigidité, et/ou la magnitude de l'entrainement. En particulier, la hauteur de la ligne de coupe peut être réglée par un actuateur. Les actuateurs peuvent être contrôlés manuellement, automatiquement et/ou via un logiciel.

Dans le cadre du présent document, un déplacement du dispositif de coupe vers l'avant est un déplacement par rapport au lit de poudre et peut donc être un déplacement du lit de poudre vers l'arrière par rapport au dispositif de coupe.

Dans le cadre du présent document, la poudre en contact avec la surface de support peut, par exemple, être sur la surface de support.

Dans un mode de réalisation de l'invention, le système de nivellement comprend en outre un guide situé au moins partiellement face à la surface de support et agencé pour canaliser au moins une partie de la poudre en contact avec la surface de support lorsqu'elle se dirige vers la sortie.

Le guide et le dispositif de coupe forment ainsi une canalisation en direction de la sortie. Cela évite que la poudre ne parte ailleurs que vers la sortie, notamment vers le haut. Si l'entrainement se fait par aspiration, cela permet aussi de canaliser l'aspiration.

Dans un mode de réalisation de l'invention, le système d'entrainement comprend un dispositif d'aspiration agencé pour aspirer au moins une partie de la poudre en contact avec la surface de support vers la sortie. La surface de support est alors préférentiellement lisse.

Dans un mode de réalisation de l'invention, le système d'entrainement comprend un dispositif de balayage agencé pour pousser au moins une partie de la poudre en contact avec la surface de support vers la sortie. Le dispositif de balayage est préférentiellement situé à moins de 2 mm de la ligne de coupe pour éviter une accumulation de poudre qui pourrait provoquer un bouchon et/ou un nivellement présentant des tranchées.

Si le système de nivellement comprend un guide, le dispositif de balayage est préférentiellement agencé pour pousser la poudre dans la canalisation formée par le guide et le dispositif de coupe.

Préférentiellement, le dispositif de balayage comprend un arbre rotatif et une pluralité d'éléments radiaux agencés pour être entrainés en rotation par l'arbre rotatif et agencés pour pousser l'au moins une partie de la poudre en contact avec la surface de support vers la sortie.

Préférentiellement, la surface de support est agencée pour empêcher au moins une partie de la poudre en contact avec la surface de support de se déplacer vers le lit de poudre. Par exemple, la surface de support comporte des entailles bloquant la poudre se trouvant en contact avec la surface de support. Les entailles sont de préférence asymétriques de façon à ce que, pour de la poudre dans une entaille, la pente correspondant à un déplacement vers la sortie soit moindre que la pente correspondant à un déplacement vers le lit de poudre. Il est aussi possible que ce soit la rugosité, des aspérités ou des irrégularités de la surface de support qui fournissent le blocage.

Dans un mode de réalisation de l'invention, le système d'entrainement comprend un mécanisme permettant une oscillation selon la première direction de la surface de support. De préférence, ladite oscillation selon la première direction est telle qu'elle fait avancer, ou qu'elle aide à faire avancer, progressivement au moins une partie de la poudre en contact avec la surface de support vers la sortie. Par exemple, dans l'oscillation selon la première direction, l'accélération vers l'avant peut être plus grande que l'accélération vers l'arrière. Ainsi, comme la force de friction avec un plan ne dépend pas de la vitesse de friction (pour autant que l'objet soit en mouvement), on peut transmettre plus de mouvement aux particules sur le mouvement de retour de la surface de support (qui dure plus longtemps) que sur le mouvement aller (qui dure moins longtemps). L'oscillation selon la première direction permet également de faciliter la coupe en fluidisant la poudre.

Dans un mode de réalisation de l'invention, le système d'entrainement comprend un mécanisme permettant une oscillation selon une troisième direction de la surface de support, la troisième direction étant verticale. De préférence, ladite oscillation selon la troisième direction est telle qu'elle fait avancer, ou qu'elle aide à faire avancer, progressivement au moins une partie de la poudre en contact avec la surface de support vers la sortie.

Les oscillations verticales permettent de transmettre une impulsion verticale à la poudre, de la façon à la décrocher de la surface, ce qui aide à son entrainement.

Dans un mode de réalisation de l'invention, le système d'entrainement comprend un mécanisme permettant une combinaison d'oscillations selon la première et une troisième direction de la surface de support, la troisième direction étant verticale. Préférentiellement, ladite combinaison d'oscillations est telle qu'elle fait avancer, ou qu'elle aide à faire avancer, progressivement au moins une partie de la poudre en contact avec la surface de support vers la sortie.

La combinaison d'oscillations est préférentiellement telle que l'intersection de la ligne de coupe avec un plan vertical fait un mouvement qui est une combinaison d'un mouvement circulaire dans ce plan et d'un mouvement vers l'avant. Cela permet de faire sauter la poudre puis qu'elle retombe sur la surface de support, de sorte que les sauts et chutes forment un mouvement de la poudre en direction de la sortie. Un entrainement par sauts est notamment utilisé dans les bols vibrants.

Dans un mode de réalisation de l'invention, la ligne de coupe est située sur une partie pliable du dispositif de coupe, ladite partie pliable étant agencée pour plier et/ou pivoter de façon à ce que la ligne de coupe se relève lorsque la ligne de coupe rencontre un obstacle. En d'autres termes, grâce à la partie pliable, la ligne de coupe se déplace verticalement lorsqu'elle rencontre un obstacle. Cela permet d'éviter de casser le dispositif de coupe ou de déplacer l'obstacle qui peut être un objet en cours d'impression. La partie pliable est préférentiellement fixée sur un corps de dispositif, qui est déplacé dans la première direction. Lorsque la ligne de coupe rencontre un obstacle, le corps de dispositif continue le mouvement dans la première direction tandis que la partie pliable se plie de façon à ce que la ligne de coupe se relève, de préférence en raclant le dessus l'obstacle. Par exemple, la partie pliable peut être flexible, et préférentiellement plus flexible que le corps du dispositif, et/ou peut être rigide et agencée pour pivoter par rapport au corps du dispositif, et par exemple maintenue en place par un élément de rappel (notamment un ressort) qui permet qu'elle revienne en position de coupe.

Dans un mode de réalisation de l'invention, la partie pliable comprend une première partie sur laquelle sont situées la ligne de coupe et au moins une partie de la surface de support, et une deuxième partie faisant un angle non-nul, de préférence aigu, avec la première partie, le dispositif de coupe étant agencé pour que la partie pliable soit apte à pivoter autour d'un pivot situé à l'avant de la ligne de coupe par rapport au déplacement du dispositif de coupe. Ce positionnement du pivot permet un relèvement de la ligne de coupe lors de la rencontre avec un obstacle. Le pivot peut être une charnière ou un axe de pliement intrinsèque de la pièce comprenant la deuxième partie. Le pivot forme préférentiellement un axe de rotation s'étendant selon la deuxième direction.

La surface de support comprend préférentiellement une première partie, qui comprend la ligne de coupe (et la partie pliable s'il y en a une), et une deuxième partie, qui est sur le corps de dispositif. Dans un mode de réalisation, les deux parties de la surface de support sont dans la continuité l'une de l'autre.

Dans un mode de réalisation de l'invention, le dispositif de coupe comprend une lame courbe agencée de façon telle qu'au moins une partie de la surface de support est concave. La lame est préférentiellement plus fine que le corps du dispositif, ce qui lui permet d'être plus flexible. La lame peut être montée sur le corps du dispositif par une charnière. De préférence, la partie pliable du dispositif de coupe comprend une lame courbe agencée de façon telle qu'au moins une partie de la surface de support est concave.

Dans un mode de réalisation de l'invention, la partie pliable du dispositif de coupe comprend des éléments pliables indépendamment, par exemple des poils ou des lamelles, distribués selon une deuxième direction perpendiculaire à la première direction. La deuxième direction est de préférence une direction horizontale. Lorsque la ligne de coupe rencontre un obstacle dont la hauteur varie selon la deuxième direction, les éléments pliables qui touchent l'obstacle se plient, alors que les éléments pliables qui ne le touchent pas continuent à couper selon la hauteur initiale.

Dans un mode de réalisation de l'invention, les éléments pliables indépendamment sont des lamelles, sur lesquelles sont fixés des éléments d'extension formant la ligne de coupe, les éléments d'extension étant plus étendus que les lamelles selon la deuxième direction et étant plus flexibles que les lamelles. Les éléments d'extension permettent d'améliorer l'étanchéité de la coupe : cela permet d'avoir une surface particulièrement plane.

Dans un mode de réalisation de l'invention, le système de nivellement comprend en outre une soufflerie agencée pour souffler sur la poudre du lit de poudre et/ou sur la poudre en contact avec la surface de support. Lorsque la soufflerie souffle sur la poudre du lit de poudre, cela permet de mettre en mouvement les couches supérieures du lit de poudre, ce qui les rend plus faciles à couper. Lorsque la soufflerie souffle sur la poudre en contact avec la surface de support, cela aide à l'entrainement de celle-ci vers la sortie.

Dans un mode de réalisation de l'invention, le système de nivellement comprend un actuateur agencé pour modifier la hauteur de la ligne de coupe. En d'autres termes, l'actuateur permet de translater la ligne de coupe selon la troisième direction. Cela permet de modifier la hauteur du lit de poudre de façon aisée, sans devoir déplacer le support horizontal

Dans un mode de réalisation de l'invention, le dispositif de coupe est un premier dispositif de coupe, la ligne de coupe est une première ligne de coupe et la surface de support est une première surface de support, le système de nivellement comprend en outre un deuxième dispositif de coupe comprenant une deuxième ligne de coupe et une deuxième surface de support, la deuxième ligne de coupe est agencée pour couper le lit de poudre de façon à ce que la poudre coupée arrive en contact avec la deuxième surface de support lorsque le deuxième dispositif de coupe est déplacé dans la première direction par rapport au lit de poudre, la deuxième ligne de coupe est plus bas que la première ligne de coupe, en arrière de la première ligne de coupe par rapport au déplacement des dispositifs de coupes, et préférentiellement parallèle à la première ligne de coupe. Il peut y avoir plus de deux dispositifs de coupe successifs tout en restant dans le cadre de l'invention. Cela permet que chacun des dispositifs de coupe ne reçoivent pas trop de poudre coupée.

L'invention propose en outre un système d'impression tridimensionnelle comprenant :
- un dispositif de dépôt agencé pour déposer au moins une poudre de façon à former un lit de poudre,
- un système de nivellement selon l'une quelconque des modes de réalisation de l'invention agencé pour niveler ledit lit de poudre, et
- un moyen d'agglomération agencé pour agglomérer au moins une partie dudit lit de poudre après le nivellement dudit lit de poudre par ledit système de nivellement.

Le système de nivellement est préférentiellement couplé au dispositif de dépôt. Le moyen d'agglomération peut comprendre au moins un parmi : un four, un laser, un faisceau d'électrons, un laser équipé d'un système de balayage pour pouvoir chauffer l'ensemble du lit de poudre, une lampe halogène, un moyen pour générer une réaction chimique locale ou uniforme. L'agglomération peut se faire à posteriori (après dépôt d'un volume), par frittage uniforme (traitement thermique), par jet de liant, infiltration, réaction chimique, compaction,...

Dans un mode de réalisation de l'invention, le dispositif de dépôt est agencé pour déposer la au moins poudre sur le lit de poudre sans entrer en contact avec ledit lit de poudre. La combinaison d'un tel dispositif de dépôt avec un système de nivellement selon l'invention permet de perturber particulièrement peu, voire pas du tout, les couches de poudre et les parties des objets imprimées en dessous.

Dans un mode de réalisation de l'invention, le dispositif de dépôt est agencé pour déposer la au moins poudre sur le lit de poudre à des localisations sélectionnées dudit lit de poudre.

Selon l'invention, le dispositif de dépôt est agencé pour déposer une pluralité de poudres à des localisations sélectionnées, de façon à former un lit de poudre comprenant des poudres différentes, par exemple de matériaux différents et/ou de granulométries différentes. Ainsi, les différentes poudres sont à des emplacements différents du lit de poudre.

Selon un deuxième aspect, l'invention propose une méthode de nivellement pour niveler un lit de poudre, la méthode comprenant les étapes de :
- fournir le lit de poudre,
- fournir un dispositif de coupe comprenant une ligne de coupe et une surface de support,
- couper le lit de poudre à l'aide de la ligne de coupe en déplaçant le dispositif de coupe dans une première direction par rapport au lit de poudre, de sorte que la poudre coupée arrive en contact avec la surface de support, et
- entrainer la poudre en contact avec la surface de support vers une sortie.

Les avantages mentionnés pour le système s'appliquent mutatis mutandis à la méthode. La méthode comprend préférentiellement de fournir un système de nivellement selon l'un quelconque des modes de réalisation de l'invention.

L'invention propose en outre une méthode d'impression tridimensionnelle comprenant :
- une formation d'un lit de poudre,
- un nivellement du lit de poudre selon la méthode de la revendication précédente, et
- une agglomération d'au moins une partie dudit lit de poudre après nivellement.

Le nivellement peut se produire après chaque dépôt de poudre ou après plusieurs dépôts de poudre. L'agglomération peut se produire après chaque nivellement ou après plusieurs répétitions des deux étapes dépôt de poudre et nivellement. Par exemple, l'agglomération peut être réalisée après la création d'un lit de poudre qui comprend l'entièreté de la poudre qui deviendra l'objet imprimé.

L'invention propose en outre une méthode de formation d'une structure de poudre comprenant, dans cet ordre :
- un dépôt, à l'aide d'un premier dispositif de dépôt, d'une première poudre pour former une première partie de lit de poudre,
- un nivellement de la première partie de lit de poudre à l'aide d'un premier système de nivellement qui est, par exemple, tel que décrit dans le présent document,
- un dépôt, à l'aide d'un deuxième dispositif de dépôt, d'une deuxième poudre pour former une deuxième partie de lit de poudre, et
- un nivellement de la deuxième partie de lit de poudre à l'aide d'un deuxième système de nivellement qui est, par exemple, tel que décrit dans le présent document,
dans laquelle le nivellement de la première partie de lit de poudre et le nivellement de la deuxième partie de lit de poudre sont alignés verticalement.

La méthode peut comprendre 3 dépôts et 3 systèmes de nivellement, 4 dépôts et 4 systèmes de nivellement, ou plus. Le nombre de dispositifs de dépôt peut être égal, ou pas, au nombre de systèmes de nivellement.

L'invention propose en outre une méthode de création d'une forme de poudre comprenant, dans cet ordre :
- un premier dépôt de poudre, avec une première définition, pour former une première partie de la forme,
- un deuxième dépôt de poudre, avec une deuxième définition, pour former une deuxième partie de la forme, qui est partiellement superposée à la première partie de la forme, et
- un nivellement, par exemple à l'aide d'un système de nivellement tel que décrit dans le présent document, de la deuxième partie de la forme superposée à la première partie de la forme,
dans laquelle la deuxième définition est plus basse que la première définition.

Un nivellement peut aussi avoir lieu entre le premier et le deuxième dépôts de poudre.

Dans le cadre du présent document, la première poudre et la deuxième poudre sont différentes. Au moins une des caractéristiques suivantes diffère entre la première poudre et la deuxième poudre : leur distribution de taille, leur matériau, leur forme, leur couleur, leur module de Young, leur masse volumique, leur conductivité thermique, leur conductivité électrique, leur perméabilité magnétique, leur résistance à la corrosion, leur dureté, leur température de fusion, leur solubilité, leur combustibilité, leur hydrophobie, leur composition chimique.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue en coupe, schématique, d'au moins une partie d'un système de nivellement selon un premier mode de réalisation de l'invention,
- la figure 2 est une vue en coupe, schématique, d'au moins une partie d'un système de nivellement selon un deuxième mode de réalisation de l'invention,
- la figure 3a est une vue en coupe, schématique, d'au moins une partie d'un système de nivellement selon un troisième mode de réalisation de l'invention,
- la figure 3b représente la vitesse dans la première direction de la ligne de coupe en fonction du temps, dans un mode de réalisation de l'invention,
- la figure 3c est une vue en coupe, schématique, d'au moins une partie d'un système de nivellement selon un quatrième mode de réalisation de l'invention,
- la figure 3d est une vue en coupe, schématique, d'au moins une partie d'un système de nivellement selon un cinquième mode de réalisation de l'invention,
- la figure 3e représente la position de la ligne de coupe selon la troisième direction en fonction de la position dans la première direction, dans un système de nivellement selon le cinquième mode de réalisation de l'invention,
- la figure 4a est une vue en coupe, schématique, d'au moins une partie d'un système de nivellement selon un sixième mode de réalisation de l'invention,
- la figure 4b est une vue tridimensionnelle, schématique, d'au moins une partie d'un dispositif de coupe utilisé dans le sixième mode de réalisation de l'invention,
- la figure 5a est une vue en coupe, schématique, d'au moins une partie d'un système de nivellement selon un septième mode de réalisation de l'invention,
- la figure 5b est une vue tridimensionnelle, schématique, d'au moins une partie d'un dispositif de coupe utilisé dans le septième mode de réalisation de l'invention,
- la figure 6a est une vue du haut, schématique, d'au moins une partie d'un dispositif de coupe selon un huitième mode de réalisation de l'invention,
- la figure 6b est une vue en coupe, schématique, d'au moins une partie d'un dispositif de coupe utilisé dans le huitième mode de réalisation de l'invention,
- la figure 7 est une vue en coupe, schématique, d'au moins une partie d'un système de nivellement selon un neuvième mode de réalisation de l'invention,
- la figure 8a est une vue en coupe, schématique, d'au moins une partie d'un système de nivellement selon un dixième mode de réalisation de l'invention,
- la figure 8b est une vue en coupe, schématique, d'au moins une partie d'un système de nivellement selon un onzième mode de réalisation de l'invention,
- la figure 9 est une vue en coupe, schématique, d'au moins une partie d'un système de nivellement selon un douzième mode de réalisation de l'invention,
- la figure 10 est une vue en coupe, schématique, d'au moins une partie d'un système de nivellement selon un treizième mode de réalisation de l'invention,
- la figure 11 est une vue en coupe, schématique, qui illustre la réaction d'une partie pliable d'un dispositif de coupe selon un mode de réalisation de l'invention, lorsque la ligne de coupe rencontre un obstacle,
- les figures 12a et 12b sont des vues en coupe, schématiques, de ce qui se passe possiblement lorsqu'une partie pliable d'un dispositif de coupe selon un mode de réalisation de l'invention rencontre un obstacle,
- les figures 13a et 13b sont des vues en coupe, schématiques, de ce qui se passe possiblement lorsqu'une partie pliable d'un dispositif de coupe selon un autre mode de réalisation de l'invention rencontre un obstacle,
- la figure 14 est une vue en coupe, schématique, d'au moins une partie d'un système de nivellement selon un quatorzième mode de réalisation de l'invention,
- la figure 15 est une vue en coupe, schématique, d'au moins une partie d'un système de nivellement selon un quinzième mode de réalisation de l'invention,
- la figure 16 est une vue en coupe, schématique, d'au moins une partie d'un système de nivellement selon un seizième mode de réalisation de l'invention,
- la figure 17 est une vue en coupe, schématique, d'au moins une partie d'un système de nivellement selon un dix-septième mode de réalisation de l'invention,
- la figure 18 illustre, très schématiquement, un système de recyclage de poudre sur lequel peut déboucher une sortie d'un système de nivellement selon l'invention,
- la figure 19 est un schéma en blocs d'un système d'impression tridimensionnelle selon un mode de réalisation de l'invention,
- les figures 20a, 20b, 20c sont des vues du dessus, schématiques, d'une méthode d'utilisation d'un système de nivellement,
- les figures 21a, 21b, 21c sont des vues en coupe, schématiques, de ladite méthode d'utilisation,
- la figure 22 est une vue en coupe illustrant une méthode de formation d'une structure de poudre comprenant deux poudres, et
- les figures 23a, 23b sont des vues en coupe illustrant une méthode de formation d'une structure de poudre.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

Le présent document fait référence à une première 201, une deuxième 202 et une troisième 203 directions qui sont toutes perpendiculaires entre elles. De préférence, la première 201 et la deuxième 202 directions sont horizontales et la troisième direction 203 est verticale. La troisième direction 203 peut également être appelée « hauteur ».

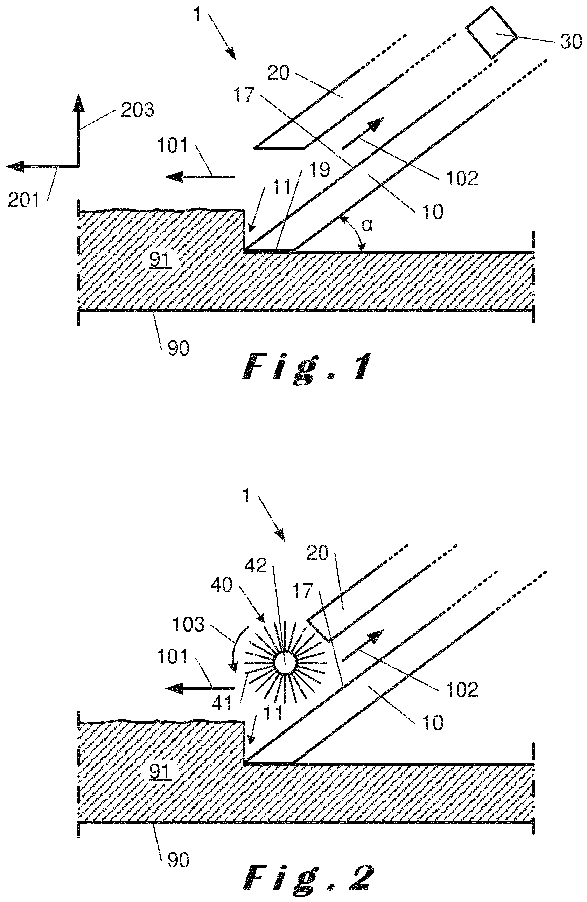

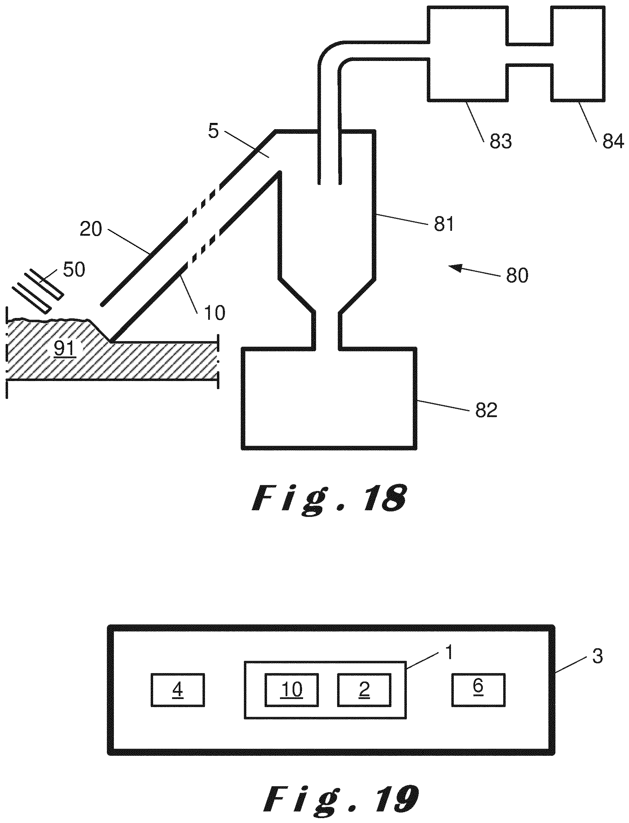

Les figures 1 à 19 illustrent différents modes de réalisation de l'invention. L'invention concerne un système de nivellement 1 et une méthode nivellement d'un lit 91 de poudre. Le lit 91 de poudre comprend des particules différentes, par exemple de matériaux différents. Il repose de préférence sur un support horizontal 90. Le système de nivellement 1 comprend un dispositif de coupe 10 pour couper la partie supérieure du lit 91 de poudre et un système d'entrainement 2 (figure 19) pour entrainer la poudre coupée vers une sortie 5, de façon à éviter que la poudre coupée ne retombe sur le lit 91 de poudre.

Le dispositif de coupe 10 comprend une ligne de coupe 11 et une surface de support 17. Lorsque le dispositif de coupe 10 est déplacé 101 dans la première direction 201, c'est-à-dire vers l'avant, la ligne de coupe 11 tranche le lit 91 de poudre de façon à le niveler. Ainsi, à l'arrière de la ligne de coupe 11, la surface du lit 91 de poudre est plane et/ou horizontale. La ligne de coupe 11 est préférentiellement parallèle à la deuxième direction 202. De préférence, la ligne de coupe 11 s'étend, selon la deuxième direction 202, d'une extrémité à l'autre du lit de poudre 91.

Lorsque la poudre coupée est désolidarisée du lit 91 de poudre par la ligne de coupe 11, elle arrive en contact avec la surface de support 17. Le système d'entrainement 2 l'entraine 102 alors en direction de la sortie 5. Le mouvement vers la sortie 102 comprend préférentiellement une composante vers l'arrière (c'est-à-dire selon la première direction 201) et une composante vers le haut (c'est-à-dire selon la troisième direction 203).

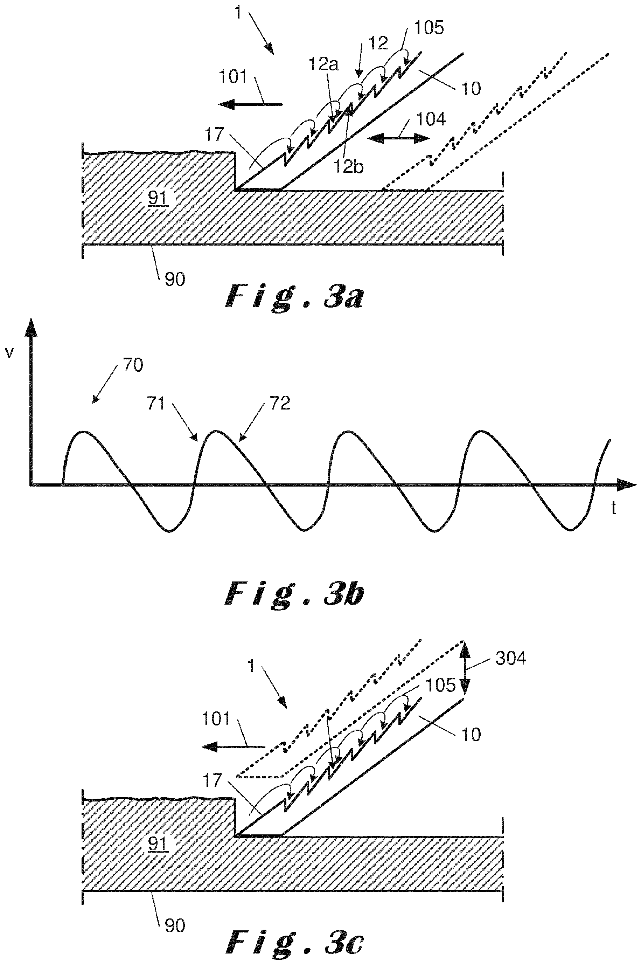

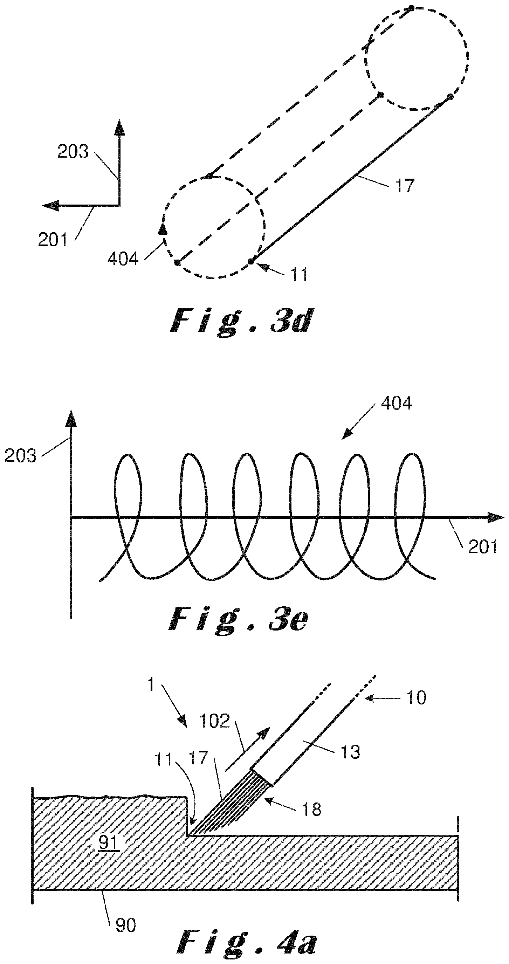

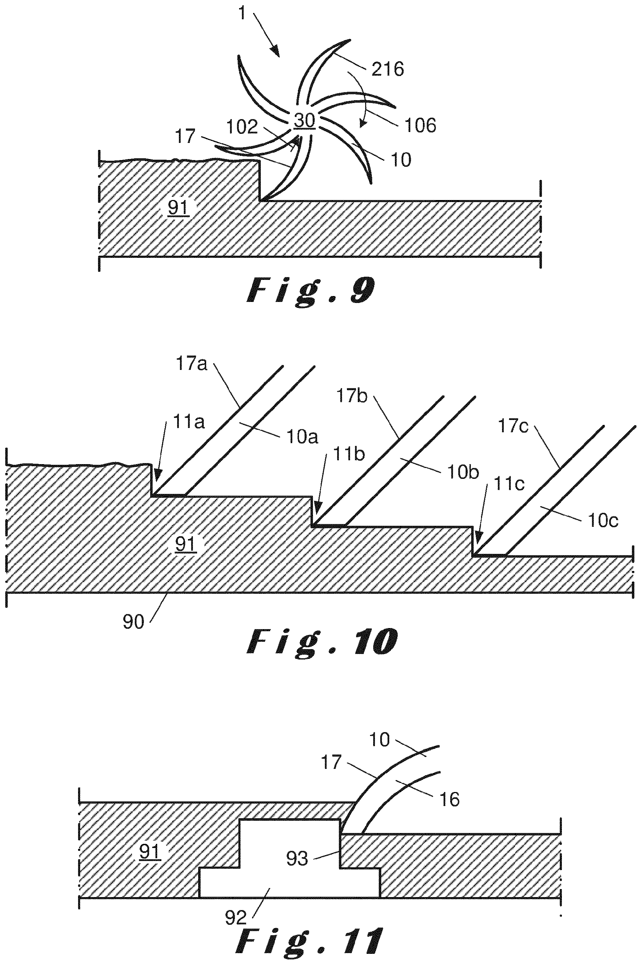

L'entrainement peut par exemple être réalisé par au moins un des moyens d'entrainement ou dispositif d'entrainement suivants : un dispositif d'aspiration 30 (figures 1 et 9), un dispositif de balayage 40 (figure 2), un mécanisme permettant une oscillation 104 de la surface de support 17 selon la première direction 201 (figure 3a), un mécanisme permettant une oscillation 304 de la surface de support 17 selon la troisième direction 203 (figure 3c), un mécanisme permettant une combinaison d'oscillations 404 de la surface de support 17 selon la première 201 et la troisième 203 direction (figure 3d), une force magnétique, une force électrostatique, un entrainement mécanique (courroie, convoyeur ou vis d'Archimède par exemple, ...). Plusieurs de ces moyens d'entrainement peuvent être combinés : par exemple un balayage de la poudre peut être suivi d'une aspiration, ou une oscillation selon la première ou la troisième direction peut être couplée avec une aspiration.

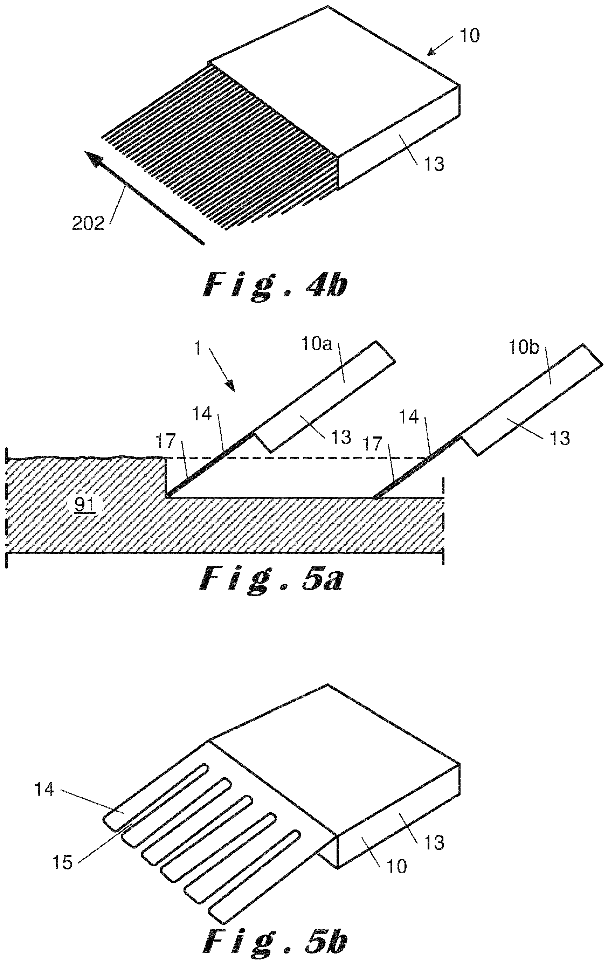

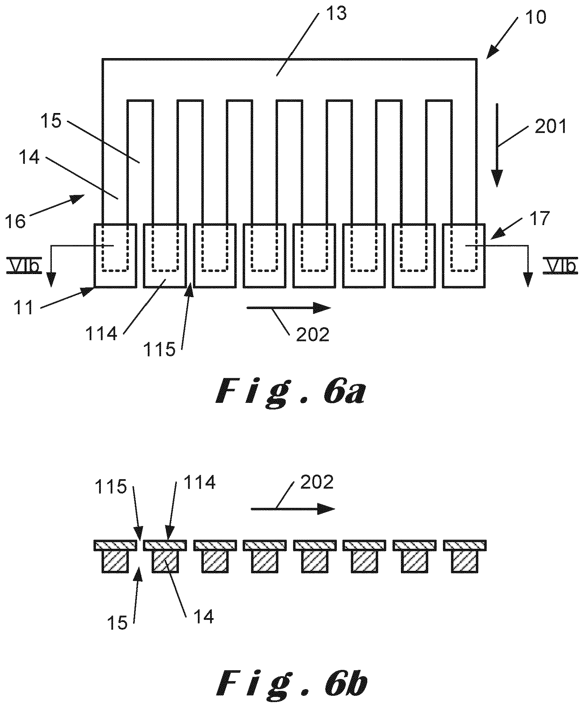

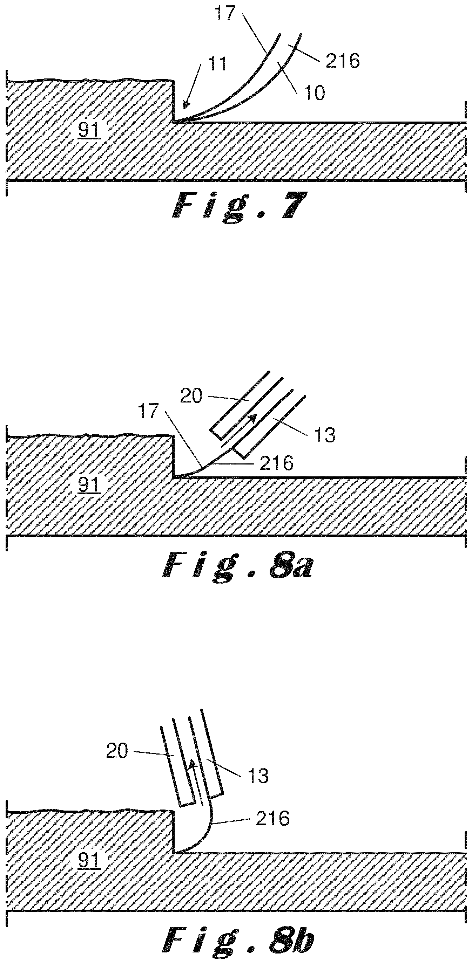

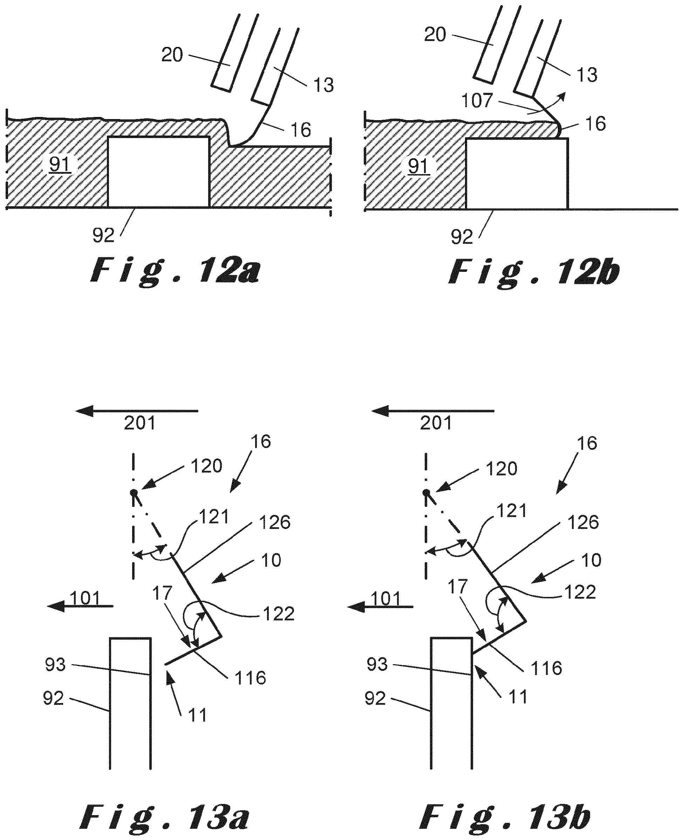

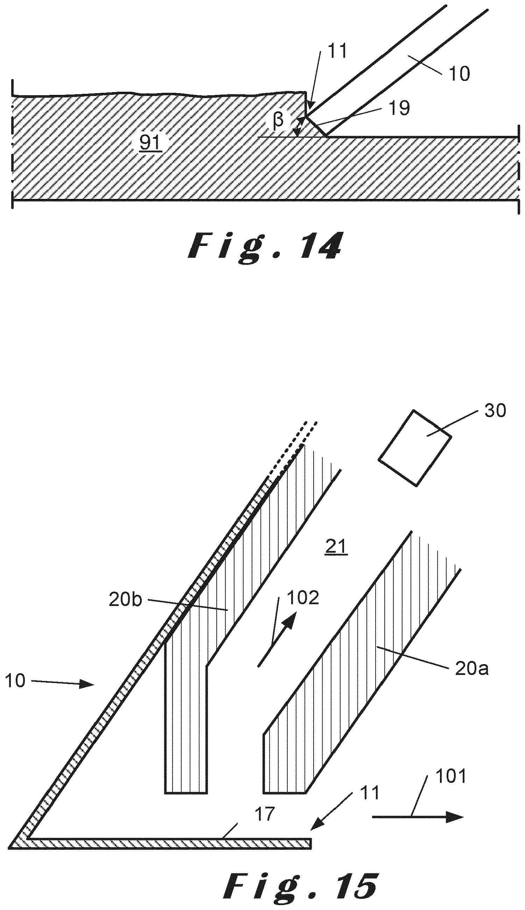

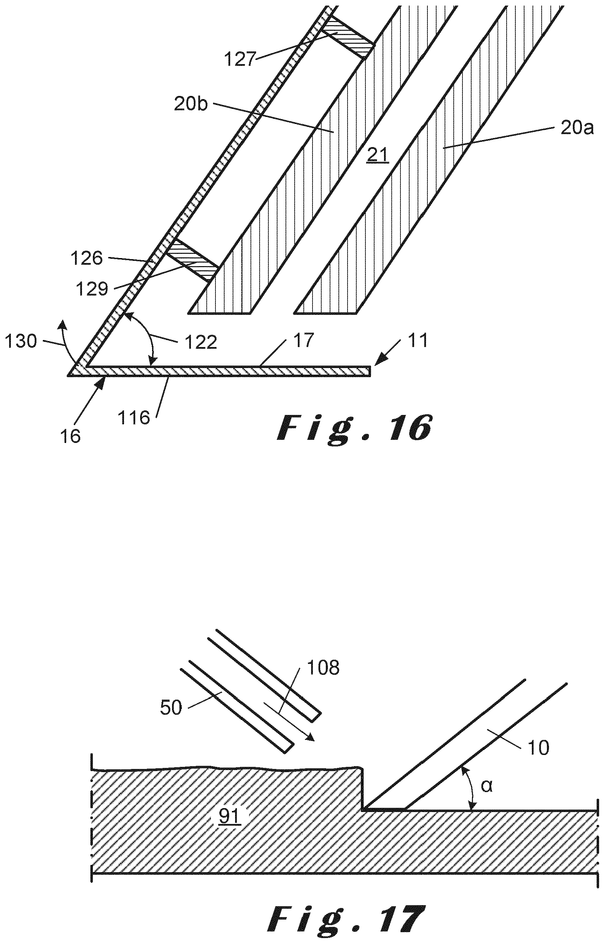

L'invention propose plusieurs modes de réalisation du dispositif de coupe 10. Notamment, la ligne de coupe 11 peut être sur une partie du dispositif de coupe 10 solidaire du reste du dispositif de coupe 10, ou sur une partie pliable 16 (figures 13a, 13b, 16) du dispositif de coupe 10. Cette partie pliable 16 peut être formée, par exemple, par deux parties en angle pivotant ensemble (figures 13a, 13b, 16), par une lame courbe 216 pliable (figures 8a, 8b) ou par des éléments pliables indépendamment, tels des poils 18 (figures 4a, 4b), des lamelles 14 (figures 5a, 5b), avec éventuellement des éléments d'extension 114 (figures 6a, 6b). En outre, la surface d'extrémité avant 19 du dispositif de coupe 10, qui joint préférentiellement la ligne de coupe 11, peut être biseautée dans un sens ou dans l'autre, par exemple de façon à être horizontale ou quasi horizontale (figure 1 par exemple), ou être perpendiculaire à la surface de support 17 (figure 14). Certaines caractéristiques de ces différents modes de réalisation sont combinables entre elles.

Les différents modes de réalisation du dispositif de coupe 10 sont tous combinables avec les différents modes de réalisation du moyen d'entrainement. Par exemple, le mécanisme permettant l'oscillation 104 selon la première direction 201 est combinable avec un dispositif de coupe 10 comprenant une lame courbe 216 pliable, des poils 18, ou des lamelles 14 ; le mécanisme permettant l'oscillation 304 selon la troisième direction 203 est combinable avec un dispositif de coupe 10 comprenant une lame courbe 216 pliable, des poils 18, ou des lamelles 14 ; le mécanisme permettant la combinaison d'oscillations 404 selon la première 201 et la troisième direction 203 est combinable avec un dispositif de coupe 10 comprenant une lame courbe 216 pliable, des poils 18, ou des lamelles 14 ; l'aspiration est combinable avec un dispositif de coupe 10 comprenant une lame courbe 216 pliable, des poils 18, ou des lamelles 14.

Dans un mode de réalisation de l'invention, la partie du dispositif de coupe 10 qui comprend la ligne de coupe 11 peut se détacher ou se rétracter en cas de collision.

Dans un mode de réalisation de l'invention, la partie du dispositif de coupe 10 qui comprend la ligne de coupe 11 est amovible. Ainsi, elle peut être remplacée manuellement ou automatiquement après ou pendant l'utilisation.

La figure 1 illustre un mode de réalisation de l'invention dans lequel le système de nivellement comprend un guide 20 formant une canalisation avec le dispositif de coupe 10. Par exemple, le dispositif de coupe 10 et le guide 20 peuvent chacun comprendre une plaque parallèle à la deuxième direction 202 (c'est-à-dire perpendiculaire au plan de la figure 1), les plaques étant parallèles entre elles. Le système d'entrainement 2, par exemple comprenant un dispositif d'aspiration 30, est agencé pour entrainer 102 la poudre se trouvant entre la surface de support 17 et le guide 20. La surface de support 17 et le guide 20 pourrait être deux côtés opposés d'une buse.

La figure 1 permet aussi d'illustrer un angle α entre le dispositif de coupe 10 et un plan horizontal. Les inventeurs ont trouvé qu'un angle α entre 10° et 15° est un bon compromis pour éviter que la paroi inférieure du dispositif de coupe 10 ne touche la poudre à l'arrière de la ligne de coupe tout en permettant une coupe efficace. En effet, un angle α trop grand a pour conséquence qu'une partie de la poudre n'est pas coupée, mais passe sous la ligne de coupe 11. Un angle α trop grand pourrait aussi créer un compactage du lit de poudre et/ou un mélange de particules différentes créant une contamination croisée et/ou rendre difficile l'entrainement de la poudre à proximité de la ligne de coupe.

La figure 2 illustre un mode de réalisation de l'invention dans lequel le système d'entrainement 2 comprend un dispositif de balayage 40 agencé pour pousser au moins une partie de la poudre vers la canalisation entre la surface de support 17 et le guide 20. Le dispositif de balayage 40 comprend préférentiellement un arbre rotatif 42 et une pluralité d'éléments radiaux 41 entrainés en rotation 103 par l'arbre rotatif 42. L'arbre rotatif 42 est préférentiellement parallèle à la deuxième direction 202.

Les figures 3a, 3c et 3d illustrent des modes de réalisation de l'invention dans lesquels la surface de support17 est préférentiellement agencée pour empêcher au moins une partie de la poudre en contact avec elle de se déplacer vers le lit 91 de poudre. Pour empêcher la poudre de redescendre vers le lit 91 de poudre, la surface de support 17 peut par exemple comprendre des entailles 12 et/ou des aspérités et/ou être micro-texturée et/ou rugueuse et/ou avoir un coefficient de friction avec la poudre adéquat pour l'empêcher de redescendre. Les entailles 12 sont formées par une succession de creux 12a et de protubérances 12b. Les entailles 12 sont préférentiellement asymétriques de sorte que, pour des particules de poudre se trouvant dans un creux 12a, la pente de la protubérance 12b vers la sortie 5 est plus faible que la pense de la protubérance 12a vers le lit 91 de poudre.

Dans le mode de réalisation de la figure 3a, le système d'entrainement 2 comprend un mécanisme permettant une oscillation 104 de la surface de support 1 selon la première direction 201. Les pointillés de la figure 3a illustre cette oscillation 104 selon la première direction 201. L'oscillation 104 selon la première direction 201 fait avancer, ou aide à faire avancer, progressivement au moins une partie de la poudre en contact avec la surface de support 17 vers la sortie 5, par exemple par sauts 105 successifs entre les entailles 12. L'oscillation 104 selon la première direction 201 a par exemple une vitesse selon la première direction 201 telle qu'illustrée par la courbe 70 de la figure 3b : la vitesse v selon la première direction 201 augmente rapidement 71 puis diminue 72 doucement en fonction du temps t. Ainsi, comme le mouvement de la surface de support 17 vers l'arrière dure plus longtemps que le mouvement vers l'avant, la poudre progresse plus vers l'arrière que vers l'avant.

Dans le mode de réalisation de la figure 3c, le système d'entrainement 2 comprend un mécanisme permettant une oscillation 304 de la surface de support 1 selon la troisième direction 203. Les pointillés de la figure 3c illustre cette oscillation 304 selon la première direction 203. L'oscillation 304 selon la troisième direction 203 fait avancer, ou aide à faire avancer, progressivement au moins une partie de la poudre en contact avec la surface de support 17 vers la sortie 5, par exemple par sauts 105 successifs.

Dans le mode de réalisation de la figure 3d, le système d'entrainement 2 comprend un mécanisme permettant une combinaison d'oscillations 404 de la surface de support 17 selon la première 201 et la troisième direction 203. La figure 3d permet de visualiser la surface de support 17 à trois moments durant ce mouvement. Ce mouvement correspond préférentiellement à un mouvement circulaire de la ligne de coupe 11. La figure 3e permet de voir l'évolution du mouvement de la ligne de coupe 11 selon la troisième direction 203 en fonction de sa position selon la première direction 201.

Les figures 4a et 4b illustrent un mode de réalisation de l'invention dans lequel le dispositif de coupe 10 comprend un corps de dispositif 13 et une partie pliable sur laquelle est située la ligne de coupe 11, la partie pliable comprenant des poils 18. Les poils 18 sont répartis selon la deuxième direction 202 et disposés en une ou plusieurs rangée(s) fixée(s) sur l'épaisseur du corps du dispositif 13. La longueur des poils 18 est de préférence décroissante vers le bas, ce qui évite que les poils 18 ne touche la surface du lit 91 de poudre à l'arrière de la ligne de coupe 11. Les figures 4a et 4b sont très schématiques et les poils 18 pourraient être beaucoup plus denses.

Les figures 5a et 5b illustrent un mode de réalisation de l'invention dans lequel le dispositif de coupe 10 comprend un corps de dispositif 13 et une partie pliable sur laquelle est située la ligne de coupe 11, la partie pliable comprenant des lamelles 14. Les lamelles 14 sont réparties selon la deuxième direction 202, séparées par des interstices 15. Le système de nivellement 1 peut comprendre au moins deux dispositifs de coupe 10a, 10b avec des lamelles 14, qui se suivent selon la première direction 201, avec des interstices 15 décalés selon la deuxième direction 202. Ainsi, la poudre n'ayant pas été coupée par le premier dispositif de coupe 10a à cause d'un interstice 15 (illustrée par un pointillé) sera coupée par une lamelle 14 du dispositif de coupe suivant 10b.

Les figures 6a et 6b illustrent une variante du mode de réalisation de l'invention illustré à la figure 5b. Dans cette variante, des éléments d'extension 114 sont fixés sur les lamelles 14 et forment la ligne de coupe 11. Les éléments d'extension 114 sont plus étendus que les lamelles 14 selon la deuxième direction 202, et donc les interstices 115 entre les éléments d'extension 114 sont plus étroits que les interstices 15 entre les lamelles 14. Les éléments d'extension 114 sont préférentiellement moins épais que les lamelles 14. Les éléments d'extension 114 s'étendent préférentiellement plus loin vers l'avant, dans la première direction 201, que les lamelles 14, de façon à ce que la ligne de coupe 11 soit formée des éléments d'extension 114. Les éléments d'extension 114 sont préférentiellement plus flexibles que les lamelles 14. Les éléments d'extension 114 peuvent être formés d'une bande découpée au niveau des interstices 15 entre les lamelles 14. Les éléments d'extension 114 forment préférentiellement la surface de support 17. Le système de nivellement 1 est préférentiellement agencé pour que le système d'entrainement de poudre 2 entraine la poudre présente sur les éléments d'extension 114 sans qu'elle n'entre en contact avec les lamelles 14. Les lamelles 14 servent de support permettant un alignement particulièrement bon entre les éléments d'extension 114, tout en permettant un déplacement vers le haut de la ligne de coupe en cas de collision avec la pièce.

La figure 7 illustre un mode de réalisation de l'invention dans lequel le dispositif de coupe 10 comprend une lame courbe 216. Celle-ci peut être solidaire du reste du dispositif de coupe 10 ou former une partie pliable du dispositif de coupe 10. Elle peut par exemple être flexible. Elle peut être faite d'acier, de silicone, de carbone ou de polyuréthane. L'épaisseur de la lame courbe 216 peut diminuer en s'éloignant de la ligne de coupe 11.

La figure 8a illustre un mode de réalisation de l'invention dans lequel le dispositif de coupe 10 comprend un corps de dispositif 13 et une partie pliable sur laquelle est située la ligne de coupe 11, la partie pliable comprenant une lame courbe 216. L'entrée de la canalisation entre le guide 20 et le dispositif de coupe 10 est située à l'arrière de la lame courbe 216.

La figure 8b illustre un mode de réalisation de l'invention dans lequel le dispositif de coupe 10 comprend un corps de dispositif 13 et une partie pliable sur laquelle est située la ligne de coupe 11, la partie pliable comprenant une lame courbe 216. Le dispositif de coupe 10 est agencé pour que la poudre en contact avec la surface de support 17 soit entrainée, au moins à un moment durant son trajet vers la sortie 5, vers l'avant. Ce mode de réalisation est particulièrement avantageux pour l'écartement de la lame courbe 216 vers le haut en cas de collision avec un obstacle.

La figure 9 illustre un mode de réalisation de l'invention dans lequel le dispositif de coupe 10 comprend une pluralité de lames courbes 216 disposées en rayon autour d'un axe de rotation. Les lames courbes 216 tournent 106 autour de cet axe, et le dispositif d'aspiration 30, par exemple une buse d'aspiration, aspire 102 la poudre située en contact avec les surfaces de support 17 des lames courbes 216. La lame courbe 216 précédente forme ainsi le guide 20 formant une canalisation avec la surface de support 17. En outre, la rotation 106 facilite l'entrainement. Le dispositif de coupe 10 comprend de préférence un guide agencé pour éviter que la poudre ne soit projetée en quittant le lit de poudre.

La figure 10 illustre un mode de réalisation de l'invention dans lequel le système de nivellement 1 comprend un premier 10a, un deuxième 10b, et un troisième 10c dispositifs de coupe, qui peuvent être n'importe quel dispositif de coupe selon un quelconque mode de réalisation de l'invention. Ils peuvent être similaires ou différents. Le premier 10a (respectivement deuxième 10b, respectivement troisième 10c) dispositif de coupe comprend une première 11a (respectivement deuxième 11b, respectivement troisième 11c) ligne de coupe et une première 17a (respectivement deuxième 17b, respectivement troisième 17c) surface de support. Le système de nivellement 1 peut comprendre plus de trois dispositifs de coupe.

La deuxième ligne de coupe 11b est plus bas que la première ligne de coupe 11a, et en arrière de la première ligne de coupe 11a par rapport au déplacement des dispositifs de coupes 10a, 10b selon la première direction 201. La troisième ligne de coupe 11c est plus bas que la deuxième ligne de coupe 11b, et en arrière de la deuxième ligne de coupe 11b par rapport au déplacement des dispositifs de coupes 10b, 10c selon la première direction 201. Les trois lignes de coupe 11a, 11b, 11c sont préférentiellement parallèles à la deuxième direction 202.

La figure 11 illustre un obstacle 92 formé par un objet en cours d'impression. On y voit que la partie pliable 16 peut se courber vers l'arrière lorsqu'elle rencontre la paroi latérale 93 de cet obstacle 92.

Les figures 12a et 12b illustrent un mode de réalisation de l'invention dans lequel le système de nivellement 1 est agencé pour que la partie pliable racle la paroi supérieure de l'obstacle 92. La figure 12a illustre la situation avant la rencontre avec l'obstacle 92 et la figure 12b illustre le raclage de la surface supérieure de l'obstacle 92. En effet, la partie pliable est agencée pour plier 107 ou pivoter de façon à ce que la ligne de coupe 11 se relève lorsque la ligne de coupe 11 rencontre un obstacle 92.

Les figures 13a et 13b illustrent un mode de réalisation de l'invention dans lequel le dispositif de coupe 10 comprend une partie pliable 16, qui comprend une première partie 116 et une deuxième partie 126 formant un angle 122 avec la première partie 116. La ligne de coupe 11 est sur la première partie 116. Le dispositif de coupe 10 est agencé pour que la partie pliable 16 pivote autour d'un pivot 120 situé à l'avant de la ligne de coupe 11. Dans un tel cas, lorsque la ligne de coupe 11 rencontre l'obstacle 92, l'angle 121 entre la verticale et la deuxième partie 126 augmente car le dispositif de coupe 10 pivote vers l'arrière, alors que l'angle 122 entre la première partie 116 et la deuxième partie 126 reste préférentiellement constant. Cela permet un relèvement de la ligne de coupe 11 qui évite d'endommager l'obstacle 92. La figure 13a illustre la situation avant la rencontre avec l'obstacle 92 et la figure 13b le relèvement de la ligne de coupe 11 lors de la rencontre avec l'obstacle 92.

La figure 14 permet d'illustrer un angle β entre la surface d'extrémité avant 19 du dispositif de coupe 10 et l'horizontale. L'angle β peut être tel que la surface d'extrémité avant 19 est biseautée dans un sens, dans l'autre, ou forme un angle droit avec la surface de support 17. Si l'angle β est entre 0 et 90°, la surface d'extrémité avant 19 comprime la poudre restant sur le lit 91 de poudre, ce qui permet d'améliorer sa densité.

La figure 15 illustre un mode de réalisation de l'invention dans lequel le guide 20 comprend deux parties 20a, 20b, séparée par une canalisation 21 débouchant vers la surface de support 17.

La figure 16 illustre un mode de réalisation de l'invention combinant certaines caractéristiques des modes de réalisation des figures 5b, 13a et 13b, et 15. Le guide 20 comprend deux parties 20a, 20b, séparée par une canalisation 21 débouchant vers la surface de support 17. Le dispositif de coupe 10 comprend une partie pliable 16 comprenant une première partie 116 et une deuxième partie 126 un angle 122. La première partie 116 et la deuxième partie 126 sont par exemple faites de lamelles 14, qui sont fixées au guide 20 par un élément de fixation 127. Avant de rencontrer un obstacle, la deuxième partie 126 repose, au moins partiellement, sur un ergot 129 fixé à une partie du guide 20b. Lorsque la première partie 116 rencontre un obstacle, comme illustré figures 13a, 13b, la deuxième partie 126 recule et se soulève (flèche 130) et s'éloigne de l'ergot 129. Après l'obstacle, la deuxième partie 126 revient au contact de l'ergot 129 par rappel élastique. Ainsi, l'ergot 129 permet que la deuxième partie 126 reprenne une position précise, et permet donc un positionnement de la ligne de coupe 11 particulièrement précis. Le mode de réalisation illustré à la figure 16 est particulièrement bien adapté pour être agencé comme illustré aux figures 13a et 13b.

La figure 17 illustre un mode de réalisation de l'invention dans lequel le système de nivellement 1 comprend une soufflerie 50 agencée pour souffler 108, par exemple de l'air, sur la poudre du lit 91 de poudre et/ou sur la poudre en contact avec la surface de support 17.

La figure 18 illustre un mode de réalisation de l'invention dans lequel la sortie 5 débouche sur un système de recyclage de poudre 80 comprenant un cyclone 81 relié d'une part à un réservoir 82 et d'autre part à un ventilateur 83 lui-même relié à un filtre 84. Un tel système de recyclage de poudre 80 forme un dispositif d'aspiration 30 permettant d'entrainer la poudre en contact avec la surface de support 17. Il permet de récupérer la poudre par rapport au flux d'air. La figure 18 n'est pas à l'échelle.

La figure 19 représente un système d'impression tridimensionnelle 3 selon un mode de réalisation de l'invention. Il comprend un dispositif de dépôt 4 agencé pour déposer une poudre de façon à former un lit 91 de poudre, un système de nivellement 1 tel que décrit dans le présent document et agencé pour niveler ledit lit 91 de poudre, avec un dispositif de coupe 10 et un système d'entrainement 2, et un moyen d'agglomération 6 agencé pour agglomérer au moins une partie du lit 91 de poudre après nivellement. Optionnellement, après nivellement, le lit 91 de poudre peut être compacté, par exemple par un rouleau de compaction.

Le système de nivellement 1 peut être situé en avant ou en arrière du dispositif de dépôt 4. Si le dispositif de dépôt 4 comprend un rouleau rotatif, par exemple tel que décrit dans WO2018059833, l'axe de ce rouleau peut être parallèle à la deuxième direction 202, ou peut ne pas l'être.

Tout mouvement du dispositif de coupe 10 par rapport au lit 91 de poudre est possible tout en restant dans le cadre de l'invention. Par exemple, ce mouvement pourrait comprendre une combinaison de translations dans la première 201 et la deuxième 202 directions. Il pourrait aussi comprendre une rotation selon un axe vertical.

Dans un mode de réalisation de l'invention, le système de nivellement 1 et le dispositif de dépôt 4 sont fixes et le support 90 du lit 91 de poudre se déplace selon la première direction 101.

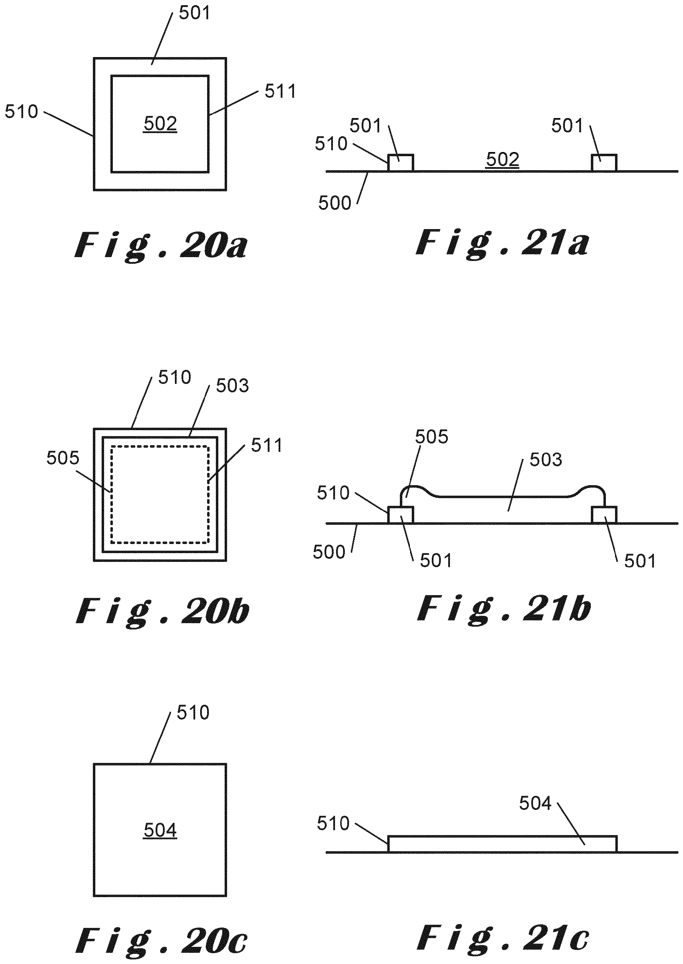

Les figures 20a-c et 21a-c illustrent une méthode d'utilisation d'un système de nivellement pour niveler un lit de poudre. Cette méthode peut être employée avec le système de nivellement 1 selon l'invention ou un autre système de nivellement. Les figures 20a et 21a montrent un premier dépôt de poudre sur un support 500, avec une première définition, qui dépose une première partie 501 de la forme désirée. Dans l'exemple illustré, la première partie 501 est un contour entourant un trou 502.

Les figures 20b et 21b montrent un deuxième dépôt de poudre sur le support 500, avec une deuxième définition, qui dépose une deuxième partie 503, par exemple un remplissage dudit trou 502. La deuxième définition est plus faible que la première. La deuxième partie 503 déborde sur la première partie 501 afin d'éviter les endroits sans poudre. En d'autres termes, la deuxième partie 503 se superpose, partiellement et non totalement, à la première partie 501. Ainsi, dans le cas d'un contour, la deuxième partie 503 est moins étendue que le périmètre extérieur 510 du contour, et plus étendu que le périmètre intérieur 511 du contour.

Les figures 20c et 21c montrent le résultat d'un nivellement de la première 501 et la deuxième 503 parties: on obtient la forme désirée 504 avec une surface supérieure plane.

La méthode permet d'obtenir une forme 504 de grande définition sur les parties sans superposition (dans l'exemple illustré, la définition du périmètre extérieur 510 est la première définition) déposée rapidement (dans l'exemple illustré, la partie centrale est déposée avec la deuxième définition qui permet un dépôt plus rapide). Cette méthode est particulièrement adaptée aussi pour déposer une première partie 501 formée par des ilots, des excroissances, ou tout motif requérant une grande définition, c'est-à-dire des parties particulièrement fines.

Selon l'invention, le premier dépôt de poudre dépose une première poudre, et le deuxième dépôt de poudre dépose une deuxième poudre, différente de la première poudre. Par exemple, la première et la deuxième poudres peuvent être faites de matériaux différents. Un nivellement peut être prévu entre le premier et le deuxième dépôts

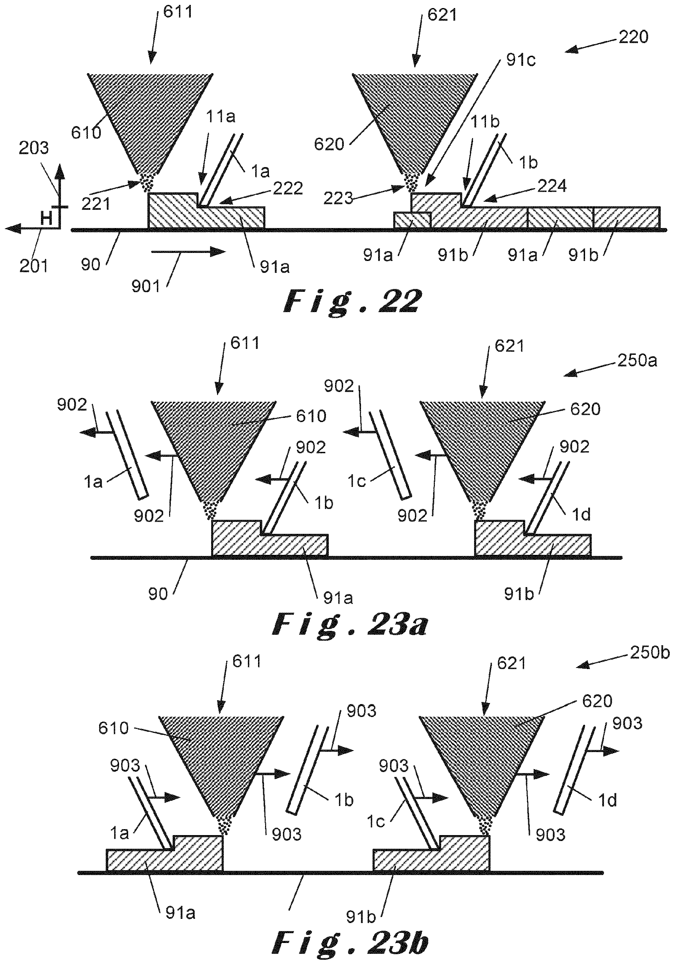

La figure 22 illustre une méthode de formation 220 d'une structure de poudre comprenant deux poudres, selon un mode de réalisation de l'invention. La flèche 901 indique le sens du mouvement du support horizontal 90. Une première poudre 610 est déposée 221 à l'aide d'un premier dispositif de dépôt 611, de façon à former une première partie 91a de lit de poudre. La première partie 91a de lit de poudre comprend préférentiellement des trous. Ensuite, un premier système de nivellement 1a, selon un des modes de réalisation de l'invention ou un autre, coupe 222 la partie supérieure de la première partie 91a de lit de poudre. La première poudre 610 coupée peut être récupérée. Le premier système de nivellement 1a a une ligne de coupe 11a située à une hauteur H par rapport au support 90.

Une deuxième poudre 620 est ensuite déposée 222 à l'aide d'un deuxième dispositif de dépôt 621, de façon à former une deuxième partie 91b de lit de poudre. La deuxième partie 91b de lit de poudre remplit, au moins partiellement, certains des trous de la première partie 91a de lit de poudre. Elle forme préférentiellement des superpositions 91c avec la première partie 91a de lit de poudre. Ensuite, un deuxième système de nivellement 1b, selon un des modes de réalisation de l'invention ou un autre, coupe 224 la partie supérieure de la deuxième partie 91b de lit de poudre et les superpositions 91c.

La ligne de coupe 11b du deuxième système de nivellement 1b est préférentiellement située substantiellement à la même hauteur H par rapport au support 90 que la ligne de coupe 11a du premier système de nivellement 1a. Cela permet d'obtenir une structure finale sans superposition. L'inconvénient est que le nivellement par le deuxième système de nivellement 1b récupère un mélange de première 610 et deuxième 611 poudres. Si on veut récupérer que la deuxième poudre 611 non-mélangée à la première poudre 610, il est préférable que la ligne de coupe 11b du deuxième système de nivellement 1b soit plus haute que la ligne de coupe 11a du premier système de nivellement 1a.

La méthode illustrée à la figure 22 peut être résumée comme suit : méthode de formation 220 d'une structure de poudre comprenant, dans cet ordre :
- un dépôt 221, à l'aide d'un premier dispositif de dépôt 611, d'une première poudre 610 pour former une première partie 91a de lit de poudre,
- un nivellement 222 de la première partie 91a de lit de poudre à l'aide d'un premier système de nivellement 1a,
- un dépôt 223, à l'aide d'un deuxième dispositif de dépôt 621, d'une deuxième poudre 621 pour former une deuxième partie 91b de lit de poudre, et
- un nivellement 224 de la deuxième partie 91b de lit de poudre à l'aide d'un deuxième système de nivellement 1b,
dans laquelle le nivellement 222 de la première partie 91a de lit de poudre et le nivellement 224 de la deuxième partie 91b de lit de poudre sont alignés verticalement.

Les figures 23a, 23b illustrent une méthode de formation 250a, 250b d'une structure de poudre, selon un mode de réalisation de l'invention. Lors d'une première étape 250a, un premier dispositif de dépôt 611, un premier système de nivellement 1a, et un deuxième système de nivellement 1b (avec potentiellement un deuxième dispositif de dépôt 621, un troisième système de nivellement 1c, et un quatrième système de nivellement 1d) sont déplacés dans un premier sens 902. Le deuxième 1b (respectivement quatrième 1d) système de nivellement est situé à l'opposé du premier 1a (respectivement troisième 1c) système de nivellement par rapport au premier 611 (respectivement deuxième 621) dispositif de dépôt. Le deuxième 1b (respectivement quatrième 1d) système de nivellement est plus bas que le premier 1a (respectivement troisième 1c) système de nivellement lors du déplacement dans le premier sens 902. Ainsi le deuxième 1b (respectivement quatrième 1d) système de nivellement entre en contact avec la première 91a (respectivement deuxième 91b) partie de lit de poudre, qui est déposée par le premier 611 (respectivement deuxième 621) dispositif de dépôt, alors que le premier 1a (respectivement troisième 1c) système de nivellement n'entre pas en contact avec la première 91a (respectivement deuxième 91b) partie de lit de poudre.

Lors d'une deuxième étape 250b, le premier dispositif de dépôt 611, le premier système de nivellement 1a, et le deuxième système de nivellement 1b (avec potentiellement le deuxième dispositif de dépôt 621, le troisième système de nivellement 1c, et le quatrième système de nivellement 1d) sont déplacés dans un deuxième sens 903 opposé au premier sens 902. Par rapport à la première étape 250a, le deuxième 1b (respectivement quatrième 1d) système de nivellement est abaissé, et le premier 1a (respectivement troisième 1c) système de nivellement est relevé, de sorte que le deuxième 1b (respectivement quatrième 1d) système de nivellement est plus haut que le premier 1a (respectivement troisième 1c) système de nivellement lors du déplacement dans le deuxième sens 603. Ainsi le deuxième 1b (respectivement quatrième 1d) système de nivellement n'entre pas en contact avec la première 91a (respectivement deuxième 91b) partie de lit de poudre alors que le premier 1a (respectivement troisième 1c) système de nivellement entre en contact avec la première 91a (respectivement deuxième 91b) partie de lit de poudre.

Les premier 611 et deuxième 621 dispositifs de dépôt illustrés aux figures 22, 23a, 23b peuvent être quelconque ou impliqués chacun un rouleau, par exemple comme décrit dans le document PCT/EP2017/071039. Dans les méthodes décrites en référence à ces figures, il est possible que le support 90 se déplace 901, tout comme il est possible que les dispositifs 611, 621 de dépôt, et les systèmes de nivellement 1a-d se déplacent 902, 903.

En d'autres termes, l'invention se rapporte à un système et une méthode de nivellement d'un lit 91 de poudre. Le système comprend un dispositif de coupe 10 comprenant une ligne de coupe 11 et une surface de support 17. Le lit 91 de poudre est coupé par la ligne de coupe 11 qui se déplace selon une première direction 201 de sorte que la poudre coupée se retrouve en contact avec la surface de support 17, où elle est entrainée vers une sortie 5 par un système d'entrainement de poudre. La présente invention peut notamment être utilisée dans tout système ou procédé impliquant un lit de poudre ou un dépôt d'un revêtement de poudre sur n'importe quel substrat (vitres, planches, tôles, carrelages, vinyle,...).

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Système comprenant :
• un dispositif de dépôt (4) agencé pour déposer une pluralité de poudres à des localisations sélectionnées, de façon à former un lit (91) de poudre comprenant des poudres différentes ;
• un système de nivellement (1) pour niveler le lit (91) de poudre ;
**caractérisé en ce que** le système de nivellement (1) comprend :
∘ un dispositif de coupe (10) comprenant une ligne de coupe (11) et une surface de support (17), la ligne de coupe (11) étant couplée mécaniquement à la surface de support (17) et agencée pour couper le lit de poudre (91) de façon à ce que la poudre coupée arrive en contact avec la surface de support (17) lorsque le dispositif de coupe (10) est déplacé dans une première direction (201) par rapport au lit (91) de poudre, et
∘ un système d'entrainement de poudre (2) agencé de façon à entrainer la poudre en contact avec la surface de support (17) vers une sortie (5).

2. Système selon la revendication 1, dans lequel le système de nivellement (1) comprend en outre un guide (20) situé au moins partiellement face à la surface de support (17) et agencé pour canaliser au moins une partie de la poudre en contact avec la surface de support (17) lorsqu'elle se dirige vers la sortie (5).

3. Système selon la revendication 1 ou 2, dans lequel le système d'entrainement (2) comprend un dispositif d'aspiration (30) agencé pour aspirer au moins une partie de la poudre en contact avec la surface de support (17) vers la sortie (5).

4. Système selon l'une quelconque des revendications précédentes, dans lequel le système d'entrainement (2) comprend un dispositif de balayage (40) agencé pour pousser au moins une partie de la poudre en contact avec la surface de support (17) vers la sortie (5).

5. Système selon l'une quelconque des revendications précédentes, dans lequel le système d'entrainement (2) comprend un mécanisme permettant une combinaison d'oscillations (404) selon la première (201) et une troisième direction (203) de la surface de support (17), la troisième direction (304) étant verticale.

6. Système selon l'une quelconque des revendications précédentes, dans lequel le dispositif de coupe (10) comprend une partie pliable (16) sur laquelle sont situées la ligne de coupe (11) et au moins une partie de la surface de support (17).

7. Système selon la revendication précédente, dans lequel la partie pliable (16) comprend une première partie (116) sur laquelle sont situées la ligne de coupe (11) et au moins une partie de la surface de support (17), et une deuxième partie (126) faisant un angle (122) non-nul, de préférence aigu, avec la première partie (116), le dispositif de coupe (10) étant agencé pour que la partie pliable (16) soit apte à pivoter autour d'un pivot (120) situé à l'avant de la ligne de coupe (11) par rapport au déplacement du dispositif de coupe (10).

8. Système selon la revendication 6 ou 7, dans lequel la partie pliable (16) comprend des éléments pliables indépendamment, par exemple des poils (18) ou des lamelles (14), distribués selon une deuxième direction (202) perpendiculaire à la première direction (201) et horizontale.

9. Système selon la revendication précédente, dans lequel les éléments pliables indépendamment sont des lamelles (14), sur lesquelles sont fixés des éléments d'extension (114) formant la ligne de coupe (11), les éléments d'extension (114) étant plus étendus que les lamelles (14) selon la deuxième direction (202) et étant plus flexibles que les lamelles (14).

10. Système selon l'une quelconque des revendications précédentes, comprenant en outre une soufflerie (50) agencée pour souffler sur la poudre du lit (91) de poudre et/ou sur la poudre en contact avec la surface de support (17).

11. Système selon l'une quelconque des revendications précédentes, dans lequel le dispositif de coupe (10) est un premier dispositif de coupe (10a), la ligne de coupe (11) est une première ligne de coupe (11a) et la surface de support (17) est une première surface de support (17),
le système de nivellement comprenant en outre un deuxième dispositif de coupe (10b) comprenant une deuxième ligne de coupe (11b) et une deuxième surface de support (17b),
la deuxième ligne de coupe (11b) étant agencée pour couper le lit de poudre (91) de façon à ce que la poudre coupée arrive en contact avec la deuxième surface de support (17b) lorsque le deuxième dispositif de coupe (10b) est déplacé dans la première direction (201) par rapport au lit (91) de poudre,
la deuxième ligne de coupe (11b) étant plus bas que la première ligne de coupe (11a), en arrière de la première ligne de coupe (11a) par rapport au déplacement des dispositifs de coupes (10a, 10b), et préférentiellement parallèle à la première ligne de coupe (11a).

12. Système selon l'une quelconque des revendications précédentes, étant un système d'impression tridimensionnelle (3) comprenant un moyen d'agglomération (6) agencé pour agglomérer au moins une partie dudit lit (91) de poudre après le nivellement dudit lit (91) de poudre par ledit système de nivellement.

13. Méthode comprenant de :
• déposer, à l'aide d'un dispositif de dépôt (4), une pluralité de poudres à des localisations sélectionnées, de façon à former un lit (91) de poudre comprenant des poudres différentes,
**caractérisée en ce qu'**elle comprend les étapes de :
• fournir un dispositif de coupe (10) comprenant une ligne de coupe (11) et une surface de support (17), la ligne de coupe (11) étant couplée mécaniquement à la surface de support (17),
• couper le lit (91) de poudre à l'aide de la ligne de coupe (11) en déplaçant le dispositif de coupe (10) dans une première direction (201) par rapport au lit (91) de poudre, de sorte que la poudre coupée arrive en contact avec la surface de support (17), et
• entrainer la poudre en contact avec la surface de support (17) vers une sortie (5).

14. Méthode selon la revendication précédente, dans laquelle les poudres diffèrent par leur composition chimique et/ou ont des matériaux différents et/ou des granulométries différentes.

15. Méthode de création d'une forme (504) de poudre comprenant, dans cet ordre :
• un premier dépôt de poudre, avec une première définition, pour former une première partie (501) de la forme (504),
• un deuxième dépôt de poudre, avec une deuxième définition, plus basse que la première définition, pour former une deuxième partie (503) de la forme (504), qui est partiellement superposée à la première partie (501) de la forme (504), et
• un nivellement de la deuxième partie (503) de la forme (504) superposée à la première partie (501) de la forme (504), à l'aide d'un système de nivellement (1) comprenant :
∘ un dispositif de coupe (10) comprenant une ligne de coupe (11) et une surface de support (17), la ligne de coupe (11) étant couplée mécaniquement à la surface de support (17), et
∘ un système d'entrainement de poudre (2) agencé de façon à entrainer la poudre en contact avec la surface de support (17) vers une sortie (5).

## Patentansprüche

1. System, umfassend:
- eine Abscheidungsvorrichtung (4), die angeordnet ist, um eine Vielzahl von Pulvern an ausgewählten Stellen abzuscheiden, um ein Pulverbett (91) zu bilden, das unterschiedliche Pulver umfasst;
- ein Nivellierungssystem (1) zum Nivellieren des Pulverbetts (91);
**dadurch gekennzeichnet, dass** das Nivellierungssystem (1) umfasst:
- eine Schneidvorrichtung (10), umfassend eine Schneidlinie (11) und eine Trägerfläche (17), wobei die Schneidlinie (11) mechanisch mit der Trägerfläche (17) gekoppelt ist, und angeordnet ist, um das Pulverbett (91) derart zu schneiden, dass das geschnittene Pulver in Kontakt mit der Trägerfläche (17) gelangt, wenn de Schneidvorrichtung (10) in einer ersten Richtung (201 ) in Bezug auf das Pulverbett (91) fortbewegt wird, und
- ein Pulver-Antriebssystem (2), das derart angeordnet ist, um das Pulver in Kontakt mit der Trägerfläche (17) zu einem Ausgang (5) zu treiben.

2. System nach Anspruch 1, wobei das Nivellierungssystem (1) weiter eine Führung (20) umfasst, die sich mindestens teilweise gegenüber der Trägerfläche (17) befindet, und angeordnet ist, um mindestens einen Teil des Pulvers in Kontakt mit der Trägerfläche (17) zu kanalisieren, wenn es auf den Ausgang (5) zugeht.

3. System nach Anspruch 1 oder 2, wobei das Antriebssystem (2) eine Saugvorrichtung (30) umfasst, die angeordnet ist, um mindestens einen Teil des Pulvers in Kontakt mit der Trägerfläche (17) zum Ausgang (5) hin zu saugen.

4. System nach einem der vorstehenden Ansprüche, wobei das Antriebssystem (2) eine Fegevorrichtung (40) umfasst, die angeordnet ist, um mindestens einen Teil des Pulvers in Kontakt mit der Trägerfläche (17) zum Ausgang (5) hin zu schieben.

5. System nach einem der vorstehenden Ansprüche, wobei das Antriebssystem (2) einen Mechanismus umfasst, der eine Kombination von Schwingungen (404) in die erste (201) und eine dritte Richtung (203) der Trägerfläche (17) zu erlauben, wobei die dritte Richtung (304) vertikal ist.

6. System nach einem der vorstehenden Ansprüche, wobei die Schneidvorrichtung (10) einen biegsamen Teil (16) umfasst, auf dem sich die Schneidlinie (11) und mindestens ein Teil der Trägerfläche (17) befinden.

7. System nach dem vorstehenden Anspruch, wobei der biegsame Teil (16) einen ersten Teil (116) umfasst, auf dem sich die Schneidlinie (11) und mindestens ein Teil der Trägerfläche (17) befinden, und einen zweiten Teil (126), der einen Winkel (122) ungleich null, vorzugsweise spitz, mit dem ersten Teil (116) einschlägt, wobei die Schneidvorrichtung (10) angeordnet ist, damit der biegsame Teil (16) imstande ist, um ein Schwenklager (120) zu schwenken, das sich in Bezug auf die Fortbewegung der Schneidvorrichtung (10) vorne an der Schneidlinie (11) befindet.

8. System nach Anspruch 6 oder 7, wobei der biegsame Teil (16) unabhängig biegsame Elemente, beispielsweise Borsten (18) oder Lamellen (14) umfasst, die in einer zweiten, zur ersten Richtung (201) senkrechten und horizontalen Richtung (202) verteilt sind.

9. System nach dem vorstehenden Anspruch, wobei die unabhängig biegsamen Elemente Lamellen (14) sind, auf denen Erweiterungselemente (114) befestigt sind, die die Schneidlinie (11) bilden, wobei die Erweiterungselemente (114) ausgedehnter als die Lamellen (14) in der zweiten Richtung (202) sind, und flexibler als die Lamellen (14) sind.

10. System nach einem der vorstehenden Ansprüche, weiter ein Gebläse (50) umfassend, das angeordnet ist, um auf das Pulver des Pulverbetts (91) und/oder auf das Pulver in Kontakt mit der Trägerfläche (17) zu blasen.

11. System nach einem der vorstehenden Ansprüche, wobei die Schneidvorrichtung (10) eine erste Schneidvorrichtung (10a) ist, die Schneidlinie (11) eine erste Schneidlinie (11a) ist und die Trägerfläche (17) eine erste Trägerfläche (17) ist,
wobei das Nivellierungssystem weiter eine zweite Schneidvorrichtung (10b) umfasst, die eine zweite Schneidlinie (11b) und eine zweite Trägerfläche (17b) umfasst,
wobei die zweite Schneidlinie (11b) angeordnet ist, um das Pulverbett (91) derart zu schneiden, dass das geschnittene Pulver in Kontakt mit der zweiten Trägerfläche (17b) gelangt, wenn die zweite Schneidvorrichtung (10b) in der ersten Richtung (201) in Bezug auf das Pulverbett (91) fortbewegt wird,
wobei die zweite Schneidlinie (11b) niedriger als die erste Schneidlinie (11a), hinter der ersten Schneidlinie (11a) in Bezug auf die Fortbewegung der Schneidvorrichtungen (10a, 10b), und vorzugsweise parallel zur ersten Schneidlinie (11a).

12. System nach einem der vorstehenden Ansprüche, das ein dreidimensionales Drucksystem (3) ist, das ein Anhäufungsmittel (6) umfasst, das angeordnet ist, um mindestens einen Teil des Pulverbetts (91) nach der Nivellierung des Pulverbetts (91) durch das Nivellierungssystem anzuhäufen.

13. Verfahren, umfassend:
- Abscheiden mithilfe einer Abscheidungsvorrichtung (4) einer Vielzahl von Pulvern an ausgewählten Stellen, um ein Pulverbett (91) zu bilden, das unterschiedliche Pulver umfasst,
**dadurch gekennzeichnet, dass** es die Schritte umfasst, zum:
- Bereitstellen einer Schneidvorrichtung (10), umfassend eine Schneidlinie (11) und eine Trägerfläche (17), wobei die Schneidlinie (11) mechanisch mit der Trägerfläche (17) gekoppelt ist,
- Schneiden des Pulverbetts (91) mithilfe der Schneidlinie (11) durch Fortbewegen der Schneidvorrichtung (10) in einer ersten Richtung (201) in Bezug auf das Pulverbett (91) sodass das geschnittene Pulver in Kontakt mit der Trägerfläche (17) gelangt, und
- Treiben des Pulvers in Kontakt mit der Trägerfläche (17) zu einem Ausgang (5).

14. Verfahren nach dem vorstehenden Anspruch, wobei sich die Pulver durch ihre chemische Zusammensetzung und/oder unterschiedliche Materialien und/oder unterschiedliche Korngrößen unterscheiden.

15. Verfahren zur Schaffung einer Pulverform (504), umfassend in dieser Reihenfolge:
- eine erste Pulverabscheidung mit einer ersten Definition, um einen ersten Teil (501) der Form (504) zu bilden,
- eine zweite Pulverabscheidung, mit einer zweiten Definition, niedriger als die erste Definition, um einen zweiten Teil (503) der Form (504) zu bilden, die teilweise mit dem ersten Teil (501) der Form (504) überlagert ist, und
- eine Nivellierung des zweiten Teils (503) der Form (504), der mit dem ersten Teil (501) der Form (504) überlagert ist, mithilfe eines Nivellierungssystems (1), umfassend:
- eine Schneidvorrichtung (10), umfassend eine Schneidlinie (11) und eine Trägerfläche (17), wobei die Schneidlinie (11) mechanisch mit der Trägerfläche (17) gekoppelt ist, und
- ein Pulver-Antriebssystem (2), das derart angeordnet ist, um das Pulver in Kontakt mit der Trägerfläche (17) zu einem Ausgang (5) zu treiben.

## Claims

1. A system comprising:
- a deposition device (4) arranged to deposit a plurality of powders at selected locations, so as to form a powder bed (91) comprising different powders,
- a levelling system (1) for levelling the powder bed (91), **characterized in that** the levelling system (1) comprises:
• a cutting device (10) comprising a cutting line (11) and a support surface (17), the cutting line (11) being mechanically coupled to the support surface (17) and arranged to cut the powder bed (91) so that the cut powder comes into contact with the support surface (17) when the cutting device (10) is displaced in a first direction (201) relative to the powder bed (91), and
• a powder drive system (2) arranged so as to drive the powder in contact with the support surface (17) towards an outlet (5).

2. The system of claim 1, wherein the levelling system (1) further comprises a guide (20) located at least partially opposite the support surface (17) and arranged to channel at least one portion of the powder into contact with the support surface (17) as it travels towards the outlet (5).

3. The system of claim 1 or 2, wherein the drive system (2) comprises a suction device (30) arranged to suck at least one portion of the powder in contact with the support surface (17) towards the outlet (5).

4. The system according to any one of the preceding claims, wherein the drive system (2) comprises a sweeping device (40) arranged to push at least one portion of the powder in contact with the support surface (17) towards the outlet (5).

5. The system according to any one of the preceding claims, wherein the drive system (2) comprises a mechanism for allowing a combination of oscillations (404) along the first (201) and a third direction (203) of the support surface (17), the third direction (304) being vertical.

6. The system according to any one of the preceding claims, wherein the cutting device (10) comprises a foldable portion (16) on which the cutting line (11) and at least one portion of the support surface (17) are located.

7. The system according to the preceding claim, wherein the foldable portion (16) comprises a first portion (116) on which the cutting line (11) and at least one portion of the support surface (17) are located, and a second portion (126) forming a non-zero angle (122), preferably an acute angle, with the first portion (116), the cutting device (10) being arranged so that the foldable portion (16) is adapted to pivot about a pivot (120) located forward of the cutting line (11) relative to the displacement of the cutting device (10).

8. The system of claim 6 or 7, wherein the foldable portion (16) comprises independently foldable elements, for example bristles (18) or slats (14), distributed along a second direction (202) perpendicular to the first direction (201) and horizontal.

9. The system according to the preceding claim, wherein the independently foldable elements are slats (14), to which are attached extension elements (114) forming the cutting line (11), the extension elements (114) being more extended than the slats (14) along the second direction (202) and being more flexible than the slats (14).

10. The system according to any one of the preceding claims, further comprising a blower (50) arranged to blow on the powder of the powder bed (91) and/or on the powder in contact with the support surface (17).

11. The system according to any one of the preceding claims, wherein the cutting device (10) is a first cutting device (10a), the cutting line (11) is a first cutting line (11a), and the support surface (17) is a first support surface (17),
the levelling system further comprising a second cutting device (10b) comprising a second cutting line (11b) and a second support surface (17b),
the second cutting line (11b) being arranged to cut the powder bed (91) so that the cut powder comes into contact with the second support surface (17b) when the second cutting device (10b) is displaced in the first direction (201) relative to the powder bed (91),
the second cutting line (11b) being lower than the first cutting line (11a), behind the first cutting line (11a) with respect to the displacement of the cutting devices (10a, 10b), and preferably parallel to the first cutting line (11a).

12. The system according to any one of the preceding claims, being a three-dimensional printing system (3) comprising an agglomerating means (6) arranged to agglomerate at least one portion of said powder bed (91) after said powder bed (91) has been levelled by said levelling system.

13. A method comprising:
• depositing, with a deposition device (4), a plurality of powders at selected locations, so as to form a powder bed (91) comprising different powders,
**characterized in that** it comprises the steps of:
• providing a cutting device (10) comprising a cutting line (11) and a support surface (17), the cutting line (11) being mechanically coupled to the support surface (17),
• cutting the powder bed (91) with the cutting line (11) by displacing the cutting device (10) in a first direction (201) relative to the powder bed (91) so that the cut powder comes into contact with the support surface (17), and
• driving the powder into contact with the support surface (17) towards an outlet (5).

14. The method according to the previous claim, wherein the powders differ in their chemical composition and/or have different materials and/or different particle sizes.

15. A method for creating a powder shape (504) comprising, in this order:
• a first powder deposit, with a first definition, to form a first portion (501) of the shape (504),
• a second powder deposit, with a second definition lower than the first definition, to form a second portion (503) of the shape (504), which is partially superimposed on the first portion (501) of the shape (504), and
• a levelling of the second portion (503) of the shape (504) superimposed on the first portion (501) of the shape (504), using a levelling system (1) comprising:
- a cutting device (10) comprising a cutting line (11) and a support surface (17), the cutting line (11) being mechanically coupled to the support surface (17), and
- a powder drive system (2) arranged so as to drive the powder in contact with the support surface (17) towards an outlet (5).
